Europäisches Patentamt

European Patent Office

Office européen des brevets

(11) Veröffentlichungsnummer: **0 173 283**
**A2**

(12) **EUROPÄISCHE PATENTANMELDUNG**

(21) Anmeldenummer: 85110694.8

(22) Anmeldetag: 26.08.85

(51) Int. Cl.⁴: **H04M 3/36** , H04M 3/22

(30) Priorität: 30.08.84 DE 3431939

(43) Veröffentlichungstag der Anmeldung:
05.03.86 Patentblatt 86/10

(84) Benannte Vertragsstaaten:
AT CH DE LI NL SE

(71) Anmelder: **Siemens Aktiengesellschaft
Berlin und München Wittelsbacherplatz 2
D-8000 München 2(DE)**

(72) Erfinder: **Augustin, Helmut, Dipl.-Ing. (FH)
Leitenfeldweg 2
D-8080 Emmering(DE)**
Erfinder: **Schenk, Erwin, Ing.-grad.
Implerstrasse 53A
D-8000 München 70(DE)**

(54) Verfahren zum Übertragen von Auswertesignalen in Verkehrserfassungsanlagen.

(57) Für das Übertragen von der Verkehrserfassung auf Fernmeldeleitungen (FML1 bis FMLn) dienenden, von einer Mehrzahl von Verkehrserfassungssensoren (VS1 bis VSn) bereitgestellten Auswertesignalen ist vorgesehen, daß diese Auswertesignale über eine für einen Zeitmultiplex-Betrieb ausgenutzte Übertragungsleitung (z.B. UEL1) zu einer zentralen Erfassungseinrichtung (ZER) hin in aufeinanderfolgenden Zeitmultiplex-Rahmen (ZMR) übertragen werden. Die von den Verkehrserfassungssensoren für die einzelnen Fernmeldeleitungen bereitgestellten und innerhalb eines Zeitmultiplex-Rahmens zu übertragenden Auswertesignale werden dabei in dem betreffenden Zeitmultiplex-Rahmen zweimal übertragen. Die innerhalb eines Zeitmultiplex-Rahmens (ZMR) übertragenen, dieselben Fernmeldeleitungen betreffenden Auswertesignale werden dann in der zentralen Erfassungseinrichtung (ZER) miteinander verglichen. Anhand der Vergleichsergebnisse wird ermittelt, ob auf der Übertragungsleitung eine Störung vorliegt oder nicht.

EP 0 173 283 A2

Verfahren zum Übertragen von Auswertesignalen in Verkehrserfassungsanlagen

Die Erfindung betrifft ein Verfahren zum Übertragen von der Verkehrserfassung auf Fernmeldeleitungen dienenden, von einer Mehrzahl von Verkehrserfassungssensoren bereitgestellten Auswertesignalen in Verkehrserfassungsanlagen, in welchen die Auswertesignale über eine für einen Zeitmultiplex-Betrieb ausgenutzte Übertragungsleitung zu einer zentralen Erfassungseinrichtung hin in aufeinanderfolgenden Zeitmultiplex-Rahmen übertragen werden.

Es ist bereits eine Schaltungsanordnung zum Übertragen von der Verkehrserfassung auf Fernmeldeleitungen dienenden Auswertesignalen in Verkehrserfassungsanlagen bekannt (siehe "Jahrbuch der Deutschen Bundespost", Verlag für Wissenschaft und Leben Georg Heidecker, 1982 (33. Jahrgang), Seiten 349 bis 380). Bei dieser bekannten Schaltungsanordnung sind für die Erfassung des Verkehrs auf Festverbindungen die zu überwachenden Leitungen mit Verkehrserfassungssensoren verbunden. Diese Verkehrserfassungssensoren geben jeweils durch Abgabe von Auswertesignalen Aufschluß darüber, ob auf der mit ihnen jeweils verbundenen Leitung eine Signalübertragung stattfindet oder nicht. Die Auswertesignale der einzelnen Verkehrserfassungssensoren werden von einem Verkehrserfassungssensoreinsatz, an den die Verkehrserfassungssensoren angeschlossen sind, abgefragt und in einem gemeinsamen Datenstrom einem lokalen Zwischenspeicher zugeführt.

Es ist nun Aufgabe der vorliegenden Erfindung, einen Weg zu zeigen, wie bei einem Verfahren der eingangs genannten Art die Übertragungsleitung hinsichtlich einer fehlerfreien Übertragung der von den Verkehrserfassungssensoren bereitgestellten Auswertesignale überwacht werden kann.

Gelöst wird die vorstehend aufgezeigte Aufgabe bei einem Verfahren der eingangs genannten Art erfindungsgemäß dadurch, daß die von den Verkehrserfassungssensoren für die einzelnen Fernmeldeleitungen bereitgestellten und innerhalb eines Zeitmultiplex-Rahmens zu übertragenden Auswertesignale in dem betreffenden Zeitmultiplex-Rahmen zweimal übertragen werden, daß die innerhalb eines Zeitmultiplex-Rahmens übertragenen dieselben Fernmeldeleitungen betreffenden Auswertesignale in der zentralen Erfassungseinrichtung miteinander verglichen werden und daß anhand der Vergleichsergebnisse ermittelt wird, ob auf der Übertragungsleitung eine Störung vorliegt oder nicht.

Die Erfindung bringt den Vorteil mit sich, daß eine Überprüfung der Übertragungsleitung anhand der übertragenen Auswertesignale erfolgt. Eine Übertragung spezieller Prüfsignale ist somit nicht erforderlich.

Für eine Beurteilung der übertragenen Auswertesignale in der zentralen Erfassungseinrichtung ist es vorteilhaft, daß die Nichtübereinstimmung der miteinander verglichenen Auswertesignale als Störung auf der Übertragungsleitung gewertet wird und daß bei einer Übereinstimmung der miteinander verglichenen Auswertesignale abhängig vom Momentanwert dieser Auswertesignale ermittelt wird, ob auf der diese Auswertesignale betreffenden Fernmeldeleitung eine Signalübertragung erfolgt oder nicht.

Für eine Auswertung der übertragenen Auswertesignale in der zentralen Erfassungseinrichtung ist es zweckmäßig, daß bei einer wiederholten Feststellung einer Nichtübereinstimmung der miteinander verglichenen, ein und dieselbe Fernmeldeleitung betreffenden Auswertesignale eine Störung signalisiert wird.

Im folgenden wird die Erfindung anhand von Zeichnungen beispielsweise näher beschrieben.

Fig. 1 zeigt in einem Blockschaltbild eine Verkehrserfassungsanlage, bei der die Erfindung angewandt ist,

Fig. 2 zeigt die innerhalb eines Zeitmultiplex-Rahmens zu der zentralen Erfassungseinrichtung hin übertragenen Signale.

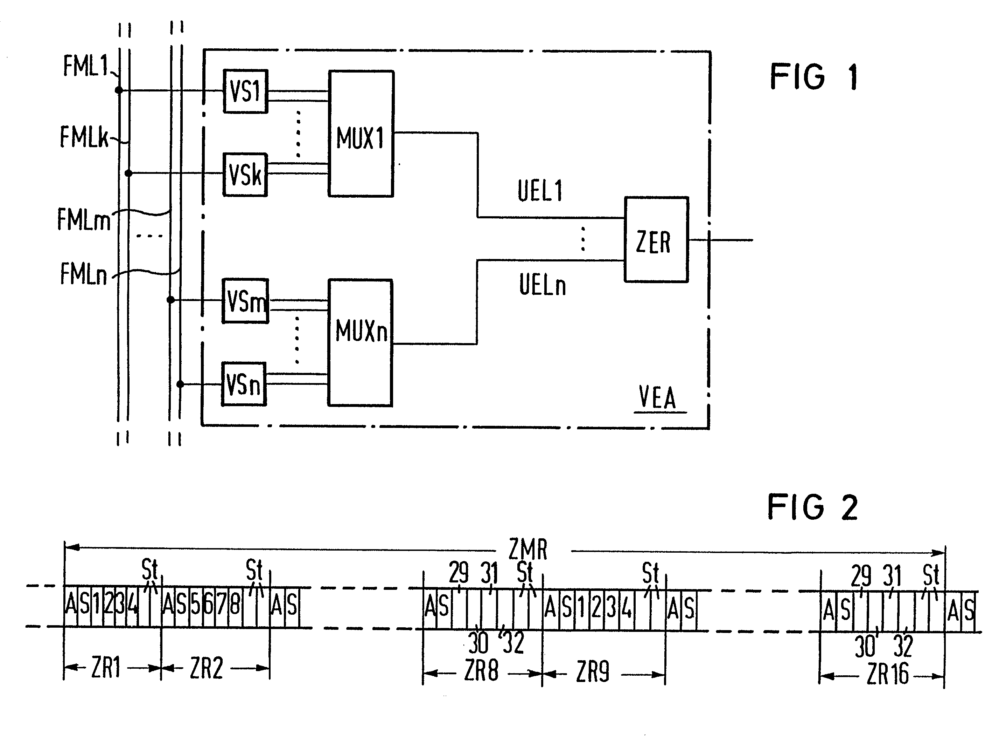

Die in Fig. 1 dargestellte Verkehrserfassungsanlage VEA weist eine Vielzahl von Verkehrserfassungssensoren VS1 bis VSn auf. Von diesen Verkehrserfassungssensoren sind in Fig. 1 lediglich die Sensoren VS1, VSk, VSm und VSn dargestellt. Jeder dieser Verkehrserfassungssensoren ist zur Erfassung des Fernmeldeverkehrs mit jeweils einer Fernmeldeleitung verbunden. So ist in Fig. 1 der Verkehrserfassungssensor VS1 mit der Fernmeldeleitung FML1, der Verkehrserfassungssensor VSk mit der Fernmeldeleitung FMLk, der Verkehrserfassungssensor VSm mit der Fernmeldeleitung FMLm und der Verkehrserfassungssensor VSn mit der Fernmeldeleitung FMLn verbunden. Die Verkehrserfassungssensoren unterscheiden dabei zwischen den zwei Erfassungskriterien "Verkehr" und "kein Verkehr", d.h. sie ermitteln, ob auf den mit ihnen jeweils verbundenen Fernmeldeleitungen eine Signalübertragung erfolgt oder nicht. Die einzelnen Verkehrserfassungssensoren geben dabei jeweils an ihrem Ausgang den beiden Erfassungskriterien entsprechende Auswertesignale ab.

Wie in Fig. 1 dargestellt, sind die Verkehrserfassungssensoren zu Gruppen zusammengefaßt. Eine erste Gruppe besteht aus den Verkehrserfassungssensoren VS1 bis VSk. Die Ausgänge der zu dieser Gruppe gehörenden Verkehrserfassungssensoren sind mit einem Multiplexer MUX1 verbunden. Eine in Fig. 1 dargestellte zweite Gruppe von Verkehrserfassungssensoren ist aus den Verkehrserfassungssensoren VSm bis VSn gebildet. Die Ausgänge der zu dieser Gruppe gehörenden Verkehrserfassungssensoren sind an einen Multiplexer MUXn angeschlossen. Jeder dieser Multiplexer übernimmt die an den Ausgängen der mit ihm verbundenen Verkehrserfassungssensoren auftretenden Auswertesignale und leitet diese über eine für einen Zeitmultiplex-Betrieb ausgenutzte Übertragungsleitung (UEL1 bis UELn) an eine zentrale Erfassungseinrichtung ZER weiter. Die Übernahme der Auswertesignale in einen Multiplexer kann dabei beispielsweise durch eine zyklische Abfrage der in Frage kommenden Verkehrserfassungssensoren erfolgen.

Im folgenden wird unter Bezugnahme auf Fig. 2 das auf den Übertragungsleitungen UEL1 bis UELn angewandte Übertragungsverfahren näher erläutert. Hierzu wird davon ausgegangen, daß an jeden der Multiplexer MUX1 bis MUXn 32 Verkehrserfassungssensoren angeschlossen sind. Diese Verkehrserfassungssensoren werden von dem zugehörigen Multiplexer in aufeinanderfolgenden Abfragezyklen jeweils einmal abgefragt. Die dabei von den Verkehrserfassungssensoren in Form von digitalen Signalen bereitgestellten Auswertesignale werden dann zu einem Zeitmultiplexsignal, wie es bereits in der DE-PS 2951914 beschrieben worden ist, zusammengefaßt und zu der zentralen Erfassungseinrichtung ZER hin übertragen. Das Zeitmultiplexsignal besteht aus einer Vielzahl von Zeitmultiplex-Rahmen, von denen einer in Fig. 2 mit ZMR bezeichnet ist.

Jeder der Zeitmultiplex-Rahmen ist in eine Mehrzahl von Zeichenrahmen, hier 16 Zeichenrahmen ZR1 bis ZR16, gegliedert. Jeder dieser Zeichenrahmen wiederum besteht aus einem Start-Stop-Signal mit einem Anlaufschritt A, einem Synchronisierbit S, vier Datenbits und einem

doppelten Stopschritt St. Als Datenbits werden dabei innerhalb eines Zeichenrahmens Auswertesignale von vier Verkehrserfassungssensoren übertragen, beispielsweise im Zeichenrahmen ZR1 Auswertesignale für die Verkehrserfassungssensoren 1 bis 4, im Zeichenrahmen ZR2 Auswertesignale für die Verkehrserfassungssensoren 5 bis 8 und schließlich im Zeichenrahmen ZR8 Auswertesignale für die Verkehrserfassungssensoren 29 bis 32. In den Zeichenrahmen ZR9 bis ZR16 erfolgt nochmals eine Übertragung der bereits in den Zeichenrahmen ZR1 bis ZR8 übertragenen Auswertesignale, d.h. im Zeichenrahmen ZR9 werden nochmals die von den Verkehrserfassungssensoren 1 bis 4 stammenden Auswertesignale übertragen. In entsprechender Weise treten im Zeichenrahmen ZR16 nochmals die Auswertesignale für die Verkehrserfassungssensoren 29 bis 32 auf.

Die Gesamtheit der innerhalb der Zeichenrahmen ZR1 bis ZR16 übertragenen Synchronisierbits ergeben ein festgelegtes Synchronisierwort. Jeweils vier aufeinanderfolgende Bits dieses Synchronisierwortes bezeichnen, wie bereits in der DE-PS 2951914 beschrieben worden ist, denjenigen Zeichenrahmen, in welchem das letzte der vier Synchronisierbits übertragen wird.

Für die Bildung eines vorstehend erläuterten Zeitmultiplex-Rahmens kann in den Multiplexern MUX1 bis MUXn beispielsweise jeweils eine in der DE-PS 2951914 beschriebene Schaltungsanordnung vorgesehen sein. Die in Fig. 3 der genannten Patentschrift mit EE bezeichnete Einphaseinrichtung ist dabei so auszubilden, daß eine zweimalige Übertragung der von den in Frage kommenden Verkehrserfassungssensoren übernommenen Auswertesignale zu dem Speicher SP hin möglich ist.

In der zentralen Erfassungseinrichtung ZER werden anhand von jeweils vier aufeinanderfolgenden Synchronisierbits die nacheinander übertragenen Zeichenrahmen ZR1 bis ZR16 eines Zeitmultiplex-Rahmens und innerhalb der Zeichenrahmen die den übertragenen Auswertesignalen zugehörigen Verkehrserfassungssensoren identifiziert. Jedem diesem Verkehrserfassungssensoren ist nun in der zentralen Erfassungseinrichtung innerhalb einer Speicheranordnung eine Speicherzelle zugeordnet. In diese Speicherzellen werden die in den Zeichenrahmen ZR1 bis ZR8 übertragenen Auswertesignale übernommen. Jedes dieser gespeicherten Auswertesignale wird anschließend mit einem in den Zeichenrahmen ZR9 bis ZR16 übertragenen, denselben Verkehrserfassungssensor betreffenden Auswertesignal verglichen. Eine Nichtübereinstimmung der miteinander verglichenen Auswertesignale wird als Störung auf der in Frage kommenden Übertragungsleitung gewertet. Bei einer wiederholten Feststellung einer solchen Nichtübereinstimmung der miteinander verglichenen, ein und denselben Verkehrserfassungssensor und damit ein und dieselbe Fernmeldeleitung betreffenden Auswertesignale wird eine Störung signalisiert. Eine solche Signalisierung kann bewirken, daß beispielsweise eine Verkehrserfassung zum Zwecke der Tarifierung für die von der Störung betroffene Fernmeldeleitung unterbleibt.

Bei einer Übereinstimmung der miteinander verglichenen Auswertesignale gibt der momentane logische Pegel dieser Auswertesignale Aufschluß darüber, ob auf der zugehörigen Fernmeldeleitung eine Signalübertragung stattfindet oder nicht, d.h. ob das Erfassungskriterium "Verkehr" oder "kein Verkehr" vorliegt. Beispielsweise kann ein logischer Pegel "1" anzeigen, daß eine Signalübertragung stattfindet. In entsprechender Weise erfolgt dann bei Auftreten eines logischen Pegels "0" keine Signalübertragung. In der zentralen Erfassungseinrichtung ZER kann dabei für eine nutzungszeitabhängige Tarifierung die Anzahl der logischen Pegel "1" erfaßt werden, welche für die einzelnen Verkehrserfassungs sensoren als Kennzeichen einer Signalübertragung in aufeinanderfolgenden Zeitmultiplex-Rahmen übertragen werden. Die jeweils ermittelte Anzahl der logischen Pegel "1" gibt dann Aufschluß über die für eine Signalübertragung auf der jeweiligen Fernmeldeleitung benötigte Zeit und damit über die zu entrichtende nutzungszeitabhängige Gebühr.

Für die vorstehend erläuterte Zwischenspeicherung der in den Zeichenrahmen ZR1 bis ZR8 übertragenen Auswertesignale kann beispielsweise so vorgegangen sein, daß die zentrale Erfassungseinrichtung ZER eingangsseitig einen sogenannten universellen Asynchron-Sender/Empfänger-Baustein aufweist, der ihm als Start-Stop-Zeichen in serieller Form angebotene Signale zeichengerecht in eine parallele Form umsetzt. Jeweils bei Vorliegen eines umgesetzten Zeichens wird dann das innerhalb eines Zeichens zusammen mit den Auswertesignalen übertragene Synchronisierbit in ein vier Bit aufnehmendes und vier parallele Ausgänge aufweisendes Schieberegister übernommen. Bei Auftreten einer Bitkombination an den Ausgängen des Schieberegisters, die einen der Zeichenrahmen ZR1 bis ZR8 identifiziert, wird ein der Bitkombination entsprechender Speicherbereich der obengenannten Speicheranordnung für das Einschreiben von Auswertesignalen adressiert. In diesen Speicherbereich werden dann die innerhalb des betreffenden Zeichenrahmens übertragenen Auswertesignale übernommen. Tritt dagegen an den Ausgängen des genannten Schieberegisters eine einen der Zeichenrahmen ZR9 bis ZR16 identifizierende Bitkombination auf, so wird für einen Auslesevorgang ein dieser Bitkombination entsprechender Speicherbereich angesteuert, in dem zuvor dieselben Verkehrserfassungssensoren betreffende Auswertesignale eingetragen worden sind. Dies ist beispielsweise bei einer den Zeichenrahmen ZR9 identifizierenden Bitkombination der Speicherbereich, in dem Auswertesignale für die Verkehrserfassungssensoren 1 bis 4 gespeichert sind.

. Nach dem Auslesen der in einem Speicherbereich gespeicherten Auswertesignale erfolgt dann mit Hilfe eines entsprechenden Vergleichers ein Vergleich dieser Auswertesignale mit den an den parallelen Ausgängen des universellen Asynchron-Sender/Empfänger-Bausteines gerade auftretenden Auswertesignalen. Dieser Vergleich kann je nach der Ausgestaltung des Vergleichers für die in Frage kommenden Verkehrserfassungssensoren getrennt oder aber auch für sämtliche Verkehrserfassungssensoren parallel durchgeführt werden. Die daraus resultierenden, oben angegebenen Vergleichsergebnisse werden dann in der zentralen Erfassungseinrichtung ZER gesondert für die einzelnen Verkehrserfassungssensoren und damit für die diesen Sensoren zugehörigen Fernmeldeleitungen weiterbehandelt.

**Ansprüche**

1. Verfahren zum Übertragen von der Verkehrserfassung auf Fernmeldeleitungen (FML1 bis FMLn) dienenden, von einer Mehrzahl von Verkehrserfassungssensoren (VS1 bis VSn) bereitgestellten Auswertesignalen in Verkehrserfassungsanlagen (VEA), in welchen die Auswertesignale über eine für einen Zeitmultiplex-Betrieb ausgenutzte Übertragungsleitung (z.B. UEL1) zu einer zentralen Erfassungseinrichtung (ZER) hin in aufeinanderfolgenden Zeitmultiplex-Rahmen (ZMR) übertragen werden, **dadurch gekennzeichnet,** daß die von den Verkehrserfassungssensoren für die einzelnen Fernmeldeleitungen bereitgestellten und innerhalb eines Zeitmultiplex-Rahmens zu übertragenden Auswertesignale in dem betreffenden Zeitmultiplex-Rahmen zweimal übertragen werden, daß die innerhalb eines Zeitmultiplex-Rahmens (ZMR) übertragenen, dieselben Fernmeldeleitungen betreffenden Auswertesignale innerhalb der zentralen Erfassungseinrichtung (ZER) miteinander verglichen werden und daß anhand der Vergleichsergebnisse ermittelt wird, ob auf der Übertragungsleitung eine Störung vorliegt oder nicht.

2. Verfahren nach Anspruch 1, **dadurch gekennzeichnet,** daß die Nichtübereinstimmung der miteinander verglichenen Auswertesignale als Störung auf der Übertragungsleitung gewertet wird und daß bei einer Übereinstimmung der miteinander verglichenen Auswertesignale abhängig vom Momentanwert dieser Auswertesignale ermittelt wird, ob auf der diese Auswertesignale betreffenden Fernmeldeleitung eine Signalübertragung erfolgt oder nicht.

3. Verfahren nach Anspruch 2, **dadurch gekennzeichnet,** daß bei einer wiederholten Feststellung einer Nichtübereinstimmung der miteinander verglichenen, ein und dieselbe Fernmeldeleitung betreffenden Auswertesignale eine Störung signalisiert wird.

**FIG 1**

**FIG 2**

0 173 283